# EUROPÄISCHE PATENTANMELDUNG

(11) **EP 1 859 929 A1**
(43) Veröffentlichungstag der Anmeldung: **28.11.2007**
(21) Anmeldenummer: 07008492.6
(22) Anmeldetag: 26.04.2007
(51) Int. Cl.: B32B 5/18, B32B 27/12, B60N 2/58, B61D 33/00

(54) **Verbundstoffbahn aus einer weich-elastischen Schaumkunststoffbahn und einer Maschenwarebahn**

(30) Priorität: 22.05.2006 DE 202006008222 U; 21.06.2006 DE 202006009789 U
(71) Anmelder: Mattes & Ammann KG, 72469 Messstetten (Tieringen) (DE)
(72) Erfinder: Larsén, Christoph Sven, 72469 Messstetten-Tieringen (DE)
(74) Vertreter: Raffay & Fleck

(57) **Zusammenfassung**

Verbundstoffbahn aus einer weich-elastischen Schaumkunststoffbahn und einer Maschenwarebahn, die auf die Schaumkunststoffbahn flamm-klebekaschiert ist, für die Herstellung von Bezügen für Kraftfahrzeuge, Flugzeuge oder Schienenfahrzeugsitzen, dadurch gekennzeichnet, dass der Schaumkunststoff einen Polyurethanether umfasst, welcher mit Maschenwarebahnen aus Polyester und/oder Polyamid sandwichartig flamm-klebekaschiert ist, und als Verbund eine Dicke von etwa 2-20 mm aufweist, wobei die Verbundstoffbahn eine Luftdurchlässigkeit besitzt, die durch die Auswahl der Dicke der Schaumstoffbahn flexibel variierbar ist

## Beschreibung

Die vorliegende Erfindung betrifft eine Verbundstoffbahn nach dem Oberbegriff des Anspruchs 1.

Eine derartige Verbundstoffbahn ist aus der DE 87 01 280 U1 bekannt geworden. Diese vorbekannte Lehre ist darauf gerichtet eine Verbundstoffbahn für die Eignung als Sitzbezug mit gutem klimatischem Sitzkomfort insbesondere für Autositze schaffen. Hierzu wurde ein Polyesterschaum und eine Textilgewebebahn aus Baumwolle oder Wolle oder auch einem synthetischen Textilgewebe vorgeschlagen. Um die gewünschte Luftdurchlässigkeit zu erlangen, muss die Verbundstoffbahn auf beiden Seiten ein übereinstimmendes Rippenmuster aufweisen.

Darüber hinaus werden dort Stärken der Schaumkunststoffbahn von maximal 10 bis 15 mm bei einem Raumgewicht von 20 bis 30 kg/m³ bei einer Luftdurchlässigkeit von 4500 bis 5500 l/m²s gefordert.

Der Erfindung liegt demgegenüber die Aufgabe zugrunde, die eingangs beschriebene Verbundkunststoffbahn so zu verbessern, dass sie in ihrem Aufbau und ihrer Herstellung einfach ist, und dass aus ihr Sitzbezüge aller Art hergestellt werden können, die aufgrund der extrem hohen Luftdurchlässigkeit ein ausgezeichnetes Ventilations- und Feuchtigkeitsleitvermögen aufweisen und zudem besonders niedrig im Gewicht und flexibel sind. Darüber hinaus sollte die erfindungsgemäße Verbundstoffbahn auch so gestaltet werden können, dass man sie an die unterschiedlichsten Anforderungsprofile bei Flug- und Fahrzeugen anpassen kann, um die gewünschten Eigenschaften, wie bspw. Luftdurchlässigkeit, Scheuerfestigkeit und Stauchhärte, zu erzielen.

Diese Aufgabe und Ziele werden durch im Anspruch 1 gekennzeichnete Verbundstoffbahn in überraschend einfacher Weise gelöst. Gerade die Auswahl der Materialien von Polyurethanether und Polyester oder -amid bei einer Verbunddicke von 4 bis 20 mm führen zu extrem hohen Luftdurchlässigkeitswerten, die bei ca. dem 10-20-fachen des eingangs zitierten Standes der Technik liegen und den klimatischen Sitzkomfort somit deutlich erhöhen. Gleichermaßen lässt sich eine hohe Scheuerfestigkeit bei gewünschter Stauchhärte erzielen, ohne dass man irgendwelche Rippen oder andere Profile für die erfindungsgemäße Verbundstoffbahn vorsehen muss.

Weitere Vorteile und Merkmale ergeben sich aus den Unteransprüchen, die auch gemeinsam mit dem Hauptanspruch von erfinderischer Bedeutung sein können.

Im Folgenden wird ein Ausführungsbeispiel der Erfindung zum besseren Verständnis derselben im Einzelnen beschrieben, ohne dass die Erfindung hierauf beschränkt ist.

Die erfindungsgemäße Verbundstoffbahn kann sowohl als Autositzbezug, der nachträglich über den fertigen Autositz gestülpt wird oder als Autositzbezugsstoff, der bei der Herstellung des Autositzes auf dem üblicherweise verwendeten Schaumstoffkern befestigt wird, eingesetzt werden. Er eignet sich auch besonders gut als Bezugsmaterial für Lastkraftwagensitze.

Als Schaumkunststoffbahn wird ein Polyurethanetherschaumstoff verwendet, der die folgenden Merkmale und Eigenschaften hat, welcher von der Firma Otto Bock Kunststoff, Duderstadt, mit der Qualität B 4558 FL-LF I bezeichnet wird.

Luftdurchlässigkeit: 270 1/20cm²min. nach DIN ES09237 Stand 1995, verw. Differenzdruck 2mbar (200Pa)

Schaumanfangsstärke : 5,3mm+/- 0,2mm

Schaumstoffendstärke: 4,0 ± 0,3 mm

Raumgewicht 45 ± 5 kg/m³

Stauchhärte: 6,0 ± 1,5 kPa

Auf diesem Polyurethanetherschaumkunststoff wird beidseitig per Flammklebekaschierung eine Polyestermaschenwarebahn aufgetragen und zwar sandwichartig auf beiden Seiten, so dass ein Gesamtaufbau entsteht, der eine Dicke von 6,2 mm +/- 0,5 mm aufweist.

Andere Wertebereiche für die Dicke der Schaumkunststoffbahn sind denkbar, die dann zu einer Gesamtdicke der Verbundstoffbahn führen, die unterhalb 20 mm liegt, insbesondere auch bei 4,2 mm +/- 0,5 mm oder bei 16,2 mm +/- 0,5 mm.

Die Luftdurchlässigkeitswerte bei einer Gesamtdicke des Verbundes von ca. 6 mm liegen im Bereich von 160 bis 180 1/20cm²min.

Bei einer Gesamtdicke des Verbundes von 14 mm liegt der Luftdurchlässigkeitswert im Bereich von 190 - 210 1/20 cm²min.

Bei einer Gesamtdicke von 2 mm liegt die Luftdurchlässigkeit im Bereich von 150 - 160 1/20 cm²min.

Erfindungsgemäß kann der Luftdurchlässigkeitswert flexibel variiert werden, und zwar durch Festlegen der Dicke der jeweils eingesetzten Schaumstoffbahn.

## Patentansprüche

1. Verbundstoffbahn aus einer weich-elastischen Schaumkunststoffbahn und einer Maschenwarebahn, die auf die Schaumkunststoffbahn flamm-klebekaschiert ist, für die Herstellung von Bezügen für Kraftfahrzeuge, Flugzeuge oder Schienenfahrzeugsitzen, **dadurch gekennzeichnet, dass** der Schaumkunststoff einen Polyurethanether umfasst, welcher mit Maschenwarebahnen aus Polyester und/oder Polyamid sandwichartig flamm-klebekaschiert ist, und als Verbund eine Dicke von etwa 2-20 mm aufweist, wobei die Verbundstoffbahn eine Luftdurchlässigkeit besitzt, die durch die Auswahl der Dicke der Schaumstoffbahn flexibel variierbar ist.

2. Verbundstoffbahn nach Anspruch 1, **gekennzeichnet durch** eine Luftdurchlässigkeit von etwa 160 - 180 1/20cm²min. bei einer Gesamtdicke der Verbundstoffbahn von 6mm vorliegt.

3. Verbundstoffbahn nach Anspruch 1, **gekennzeichnet durch** eine Luftdurchlässigkeit von etwa 190 - 210 1/20 cm²min. bei einer Gesamtdicke der Verbundstoffbahn von 14 mm.

4. Verbundstoffbahn nach Anspruch 1, **gekennzeichnet durch** eine Luftdurchlässigkeit von 150 - 160 1/20 cm²min. bei einer Gesamtdicke der Verbundstoffbahn von 2 mm.

5. Verbundstoffbahn nach Anspruch 1-4, **dadurch gekennzeichnet, dass** der Schaumkunststoff ein Raumgewicht von 40 bis 50 kg/m³, insbesondere 45 kg/m³, bei einer Stauchhärte von 4,5- 7,5 kPa aufweist.

6. Verbundstoffbahn nach Anspruch 1 und 2, **dadurch gekennzeichnet, dass** die Oberseite des Verbundes durch ein Rundstrickvelours und die Unterseite durch eine glatte Charmeuse aus Polyester oder Polyamid gebildet ist.
